# DEMANDE DE BREVET EUROPEEN

(11) **EP 3 967 781 A1**
(43) Date de publication de la demande: **16.03.2022**
(21) Numéro de dépôt: 21201707.3
(22) Date de dépôt: 10.12.2013
(51) Int. Cl.: C22B 7/00, H01M 6/52

(54) **PROCÉDÉ DE VALORISATION DE PILES ÉLECTRIQUES USAGÉES OU REBUTÉES PORTABLES**

(62) Demande divisionnaire de: 13821697.3
(71) Demandeur: Erasteel, 75015 Paris (FR)
(72) Inventeur: PICARD, Lionel, 42110 FEURS (FR); GARNIER, Jean-Pierre, 70190 PENNESSIERES (FR)
(74) Mandataire: Lavoix

(57) **Abrégé**

L'invention concerne un procédé de valorisation de piles électriques usagées ou rebutées de types portables qui comportent des composants valorisables tel que du fer, du zinc, du manganèse, du cuivre et du carbone fixe et volatil, et des métaux lourds et composés dangereux.

Le procédé est caractérisé en ce que les piles usagées ou rebutées sont introduits à titre de charge dans un four de fusion de métal type fonte (1,40,44), tel un cubilot, un four à arc libre ou un four à induction, et en ce que l'on prévoit dans la voie d'évacuation des gaz chauds en aval du four de fusion, un dispositif (16,23) de purification des gaz pour capter et éliminer les éléments nocifs tels, que le mercure, les chlorures voire fluorures et les molécules lourdes telles les dioxines furannes et aromatiques.

L'invention est utilisable pour la valorisation de piles usagées ou rebutées.

## Description

L'invention concerne un procédé de valorisation de piles électriques usagées ou rebutées portables, telles que des piles salines, alcalines, boutons de faibles dimensions, qui comportent des composants valorisables tels que du fer, du zinc, du manganèse du carbone, du cuivre et des métaux lourds et composés organiques/organo-métalliques dangereux tels que du mercure, nickel, plomb, argent, braie, chlorures voire fluorures.

L'invention concerne également un système de mise en œuvre de ce procédé.

Il est connu que les piles usagées portables posent un problème environnemental considérable car ils constituent un déchet et, selon le décret numéro 2012-617 du 02-05-2012 issu de la Directive Européenne 2006/66 CE, il est obligatoire de les valoriser au lieu de les mettre en décharge ou de les incinérer avec un taux de recyclage minimum de 50%. La quantité mise sur le marché annuellement peut être évaluée à 30 000 tonnes en France et d'environ 200 000 tonnes dans l'Union Européenne.

On connaît déjà un procédé de valorisation des matières contenues dans les piles, dit par voie pyrométallurgique, au moyen d'un four électrique à arc libre, qui permet de récupérer certains éléments métalliques contenus dans les piles par production concomitante d'un métal lingoté type ferro-manganèse-nickel-cuivre, d'un laitier silico-calcique riche en Manganèse typiquement de 15 à 40%, et d'une poussière de fusion riche en Zn typiquement plus de 50% de Zn contenu.

Un autre procédé connu, dit par voie mécanique consiste à broyer les piles, puis à séparer les fractions ferreuses par voie magnétique sous forme de copeaux et la fraction non-déviée pour une valorisation ultérieure. Dans ce dernier cas, les éléments récupérés dans la fraction non-déviée sont sous forme pulvérulente et assez pâteuse dégageant une forte odeur d'ammoniac du fait des mélanges d'électrolytes des piles alcalines et salines, ce qui peut rendre leur utilisation ultérieure plus difficile à mettre en œuvre.

Ces procédés de valorisation nécessitent un investissement de capitaux importants. De plus, les produits issus de la valorisation ne sont pas utilisés in situ, et doivent être conditionnés, puis revendus vers des utilisateurs externes, ce qui conduit à des coûts logistiques et d'emballage supplémentaires ainsi que des rejets de gaz à effet de serre élevés.

Mais surtout, ces procédés ne permettent pas toujours de résoudre le problème posé par les éléments nocifs contenus dans les piles, tel que le mercure,le dioxyde de manganèse, des composés du nickel métal et oxydes-hydroxydes, plomb, argent, braie, chlorures voire fluorures ainsi que de très puissants catalyseurs de dioxines très connus tels les fines d'oxydes-hydroxydes métalliques (cas du manganèse contenu), les chlorures (cas du chlorure de Zinc) et des fines de carbone contenues (soit sous forme de graphite ou de carbone organique tel le braie) en filière de recyclage à chaud.

L'invention a pour but de proposer un procédé et un système de mise en œuvre de ce procédé, qui pallient les inconvénients qui viennent d'être énoncés.

Pour atteindre ce but, le procédé selon l'invention est caractérisé en ce que les piles usagées sont introduites à titre de charge dans un four de fusion de production de fonte tel un cubilot, un four à arc ou un four à induction, de manière à valoriser la plupart des éléments métalliques et carbonés directement de la pile à la fonte produite et en ce que l'on prévoit dans la canalisation d'évacuation des gaz chauds en aval du four de fusion, un dispositif de purification des gaz pour capter et valoriser le Zinc de façon séparative, capter les éléments nocifs le mercure et neutraliser les mécanismes pervers de formation de dioxines et furannes.

Selon une caractéristique de l'invention, le procédé est caractérisé en ce que l'on utilise un four de fusion tels un cubilot, un four à arc libre, un four à induction de production de métal type fonte et contenant du manganèse chargé dans le cubilot avec les ferrailles et autres composants de charge, et on introduit avec les charges dans le four de fusion une quantité de piles usées ou rebutées de façon que la quantité de manganèse contenue dans ces piles corresponde à la quantité de manganèse qu'il faut introduire dans le four de fusion en plus du manganèse contenu dans les ferrailles pour obtenir la teneur demandée en manganèse pour la nuance de fonte considérée.

Selon une autre caractéristique de l'invention, le procédé est caractérisé en ce que l'on diminue avantageusement la consommation de matières premières neuves tel le fer, le carbone, le cuivre dans les charges en fonction de la quantité de chacune d'elle contenus dans les piles usées ou rebutées.

Selon encore une autre caractéristique de l'invention, le procédé est caractérisé en ce que l'on soumet les fumées chaudes sortant du four de fusion à des opérations de filtrations (en 14,21) pour réduire la concentration des poussières contenues dans les fumées à une valeur inférieure à 0,5mg/Nm³ et faire passer ensuite les fumées par un lit de charbon actif sulfuré ou non pour fixer le mercure et les molécules lourdes telles les dioxines, furannes et aromatiques de façon que les fumées évacuées dans l'atmosphère (en 25) aient une teneur en mercure inférieure à 2µg/Nm³ et en dioxines inférieure à 0,1ng/Nm³.

Selon encore une autre caractéristique de l'invention, le procédé est caractérisé en ce que l'on récupère lors des opérations de filtration (en 14,21) des poussières riches en zinc, avantageusement supérieures à 20% de zinc.

Selon encore une autre caractéristique de l'invention, le procédé est caractérisé en ce qu'on utilise un lit de charbon actif sulfurés ou non en granulés d'une surface spécifique de 300 à 1500m²/g.

Selon encore une autre caractéristique de l'invention, le procédé est caractérisé en ce que l'on utilise pour la valorisation des piles usées ou rebutées un cubilot.

Selon encore une autre caractéristique de l'invention, le procédé est caractérisé en ce que l'on utilise pour la valorisation des piles usées ou rebutées un four à arc libre ou un four à induction.

L'installation pour la mise en œuvre du procédé est caractérisée en ce qu'il comprend un four de fusion de métal et un agencement de traitement de fumées en provenance du four pour réduire la teneur en poussières, en mercure et en molécules lourdes type dioxines, furannes et aromatiques dans les fumées évacuées dans l'atmosphère à des valeurs respectivement inférieure à 0,01mg/NM3, 2µg/Nm³ et inférieure à 0,1µg/Nm³.

Selon une caractéristique de l'invention, l'installation pour la mise en œuvre du procédé est caractérisée en ce que l'agencement du traitement des fumées comprend une cartouche de traitement de gaz pourvue d'un lit de charbon actif sulfuré ou non en granulés pour capter le mercure et les molécules lourdes type dioxines, furannes et aromatiques.

Selon une autre caractéristique de l'invention, l'installation pour la mise en œuvre du procédé est caractérisée en ce que l'agencement de traitement des fumées comprend des dispositifs de filtrage pour réduire la concentration des poussières dans les fumées à une valeur inférieure à 0,5mg/Nm³ en entrée de lit de charbon actifs.

Selon encore une autre caractéristique de l'invention, l'installation pour la mise en œuvre du procédé est caractérisée en ce que la cartouche comprend en amont du lit de charbon actif un dispositif d'abaissement de la température des fumées à passer par le lit de charbon à une valeur inférieure à 60°C.

Selon encore une autre caractéristique de l'invention, l'installation pour la mise en œuvre du procédé est caractérisée en ce que le dispositif d'abaissement de la température est un échangeur de chaleur.

Selon encore une autre caractéristique de l'invention, l'installation pour la mise en œuvre du procédé est caractérisée en ce que le four de fusion est un cubilot de production de fonte.

Selon encore une autre caractéristique de l'invention, l'installation pour la mise en œuvre du procédé est caractérisée en ce que le four de fusion est un four à arc ou un four à induction de production de fonte.

L'invention sera mieux comprise, et d'autres buts, caractéristiques, détails et avantages de celle-ci apparaîtront plus clairement dans la description explicative qui va suivre faite en référence aux figures schématiques annexées données uniquement à titre d'exemple, illustrant plusieurs modes de réalisation de l'invention.
- la figure 1 montre le synoptique d'un premier mode de réalisation de l'invention utilisant un cubilot de production de fonte ;
- la figure 2 montre le synoptique d'un second mode de réalisation de l'invention utilisant un four à arc libre en production de fonte, et
- la figure 3 montre un troisième mode de réalisation de l'invention utilisant un four à induction en production de fonte.

On décrira ci-après, à titre d'exemple non exclusif, tout d'abord le procédé de valorisation de piles électriques notamment alcalines et salines portables, usées ou rebutées, c'est-à-dire des matières contenues dans ces piles, qui implique l'utilisation d'un four de fusion de production de fonte tel que de fonte lamellaire ou à graphite sphéroïdal, de type cubilot à vent chaud ou froid. Mais l'invention est également applicable à d'autres types de fours de fusion, en production de fonte, comme des fours à induction ou des fours à arc libre, dans le but de valoriser les éléments contenus dans les piles électriques.

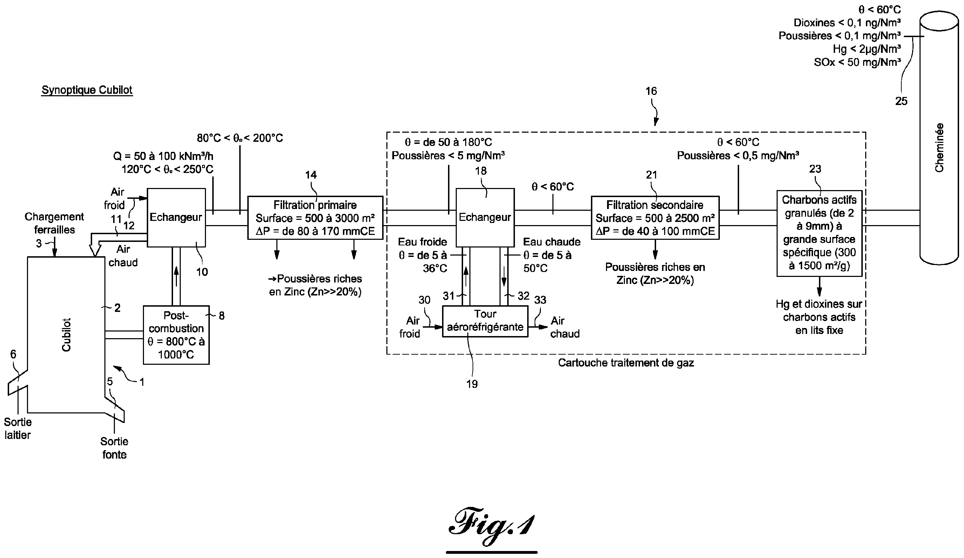

Comme le montre schématiquement la figure 1, un cubilot désigné par la référence 1 comprend un fût de forme générale cylindrique 2, en haut duquel, c'est-à-dire au gueulard 3, sont vidées les charges métalliques contenant ferrailles, fonte de récupération, coke, ferroalliage, fondants, préalablement dosés et pesés grâce à des trémies doseuses non représentées. En pied du cubilot, on constate en 5 la sortie de la fraction métal sous forme de fonte liquide et en 6, au-dessus de la sortie de fonte liquide, une sortie à travers laquelle est extraite la fraction minérale sous forme de laitier qui contient les impuretés minérales de la charge et ses fondants liquéfiés et qui surnage au-dessus de la fonte.

Au cubilot 1 sont ajoutés un dispositif de post-combustion 8 qui produit des fumées chaudes par la combustion du monoxyde de carbone lui-même provenant de la réaction chimique entre le dioxyde de carbone et le coke dans le fût du cubilot, et un échangeur de chaleur 10 qui envoie de l'air chaud en 11 dans le cubilot, obtenu par échauffement de l'air froid introduit dans l'échangeur en 12. L'air est réchauffé par les fumées chaudes en provenance du dispositif de post-combustion 8. Les fumées chaudes sortant de l'échangeur 10 traversent une station de filtration primaire 14 pour parvenir à une cartouche de traitement de gaz 16 qui constitue une caractéristique essentielle de l'invention et sera décrite plus loin de façon détaillée.

Concernant les piles usagées que l'invention propose de valoriser, elles contiennent comme métaux valorisables notamment du fer Fe par exemple à raison de 15-25%, du zinc Zn à raison de 15-30%, du manganèse Mn à raison de 12-30%, du carbone C fixe et organique à raison de 15-32%, quelques pourcentages de cuivre Cu, de nickel Ni, de potassium K et le solde en électrolyte dont de l'eau.

Conformément à l'invention, dans son application à des cubilots, la quantité de piles usagées chargées au cubilot est basée sur la teneur en manganèse demandée pour la fonte en sortie du four. De façon générale, la plupart des fontes produites par des cubilots contiennent entre 0,5% et 1% de manganèse et jusqu'à 10% pour des nuances de fontes spéciales.

Jusqu'à présent ce manganèse est acheté la plupart du temps sous forme de matière noble de ferro-manganèse. Or, si les ferrailles qu'une fonderie achète pour les charges ont un taux de manganèse de 0,3%, il faut donc rajouter 0,4% de manganèse pour fabriquer, par exemple, une fonte à 0,7% de manganèse.

Dans le cas de l'invention, ce manganèse acheté est remplacé en totalité par le manganèse apporté par les piles usagées. Les autres composants valorisables, à savoir le fer Fe, le cuivre Cu, et le carbone C contenus dans les piles et donc introduits dans le cubilot avec les piles permettent de réduire pour autant ces composants dans les charges traditionnelles ne comportant pas des piles. Les autres métaux contenus dans les piles sous forme de traces tels le nickel Ni, le cobalt Co contribuent à la qualité de la fonte en tant qu'agent perlitisants. Dans le cas du zinc Zn, celui-ci est récupéré dans les poussières de filtration des fumées, effectuée principalement au dispositif de filtration primaire 14. La concentration en Zinc contenue dans les poussières passe, alors via le traitement de piles, d'une concentration de quelques pourcents à plusieurs dizaines de pourcents permettant une valorisation beaucoup plus économique de ces poussières notamment par rapport à une mise en décharge. Dans le cas du potassium K, celui-ci est récupéré avantageusement pour partie au laitier en abaissant son point de fusion et donc économisant de l'énergie et d'autre part dans les poussières du filtre primaire sous forme de chlorure de potassium en tant qu'agent de captation et de neutralisation du chlore. Il est important de souligner que la fraction de potassium contenue dans les poussières permettra aussi d'économiser de l'énergie par abaissement de leur point de fusion lors de leur recyclage notamment dans le procédé Waelz qui a pour vocation de produire des oxydes de Zinc.

En sortie de filtration primaire, les gaz de process contenant des traces de métaux lourds volatils tel le mercure Hg voire des molécules organiques lourdes type dioxines ou aromatiques sont traités par la cartouche de traitement 16.

La cartouche de traitement de gaz 16 disposée en aval du dispositif de filtration primaire 14 comprend dans la direction d'écoulement des fumées, successivement, un échangeur de chaleur 18 relié à une tour aéroréfrigérante 19 (ou tout autre dispositif de refroidissement équivalent), un dispositif de filtration secondaire 21 et un lit de charbons actifs sulfurés ou non 23. Les fumées parfaitement propres sortant du lit 21 sont évacuées dans l'atmosphère à travers la cheminée 25.

Dans le système selon l'invention, les fumées chaudes sortant du four de fusion et/ou du système de post-combustion ont une température comprise entre 800°C et 1000°C. A la sortie de l'échangeur de chaleur 10 les fumées ont un débit de 50 à 100 kNm³/h (dans l'exemple cité) et une température comprise entre 120°C et 250°C. A l'entrée du dispositif de filtration primaire 14, cette température est de 80°C à 200°C. Le dispositif de filtration primaire comporte à titre d'exemple une surface égale à 500 à 3000m² et travaille avec une différence de pression Δp entre le caisson air sale et air épuré qui est égale à 80 à 200 mmCE. Les poussières sortant symbolisées par des flèches sont riches en zinc dont la teneur est largement supérieure à 20% et pour un débit de soutirage supérieur à 50Kg/h.

Dans la cartouche de traitement 16, à l'entrée de l'échangeur 18, la température des fumées est comprise entre 50 et 180°C et la concentration en poussières est inférieure à 5mg/Nm³. L'eau froide qui est envoyée à l'échangeur 18 par la tour aéroréfrigérante 19 en 31 à une température allant de 5 à 36°C et la température de l'eau chaude renvoyée par l'échangeur à la tour 19 est de l'ordre de 5 à 50°C. La tour aéroréfrigérante reçoit l'air froid en 30 et évacue l'air chaud en 32. La température des fumées entre l'échangeur de chaleur 18 et le dispositif de filtration secondaire est inférieure à 65°C. Le dispositif de filtration a une surface de 500 à 2500m² et la différence de pression entre le caisson air sale et air propre Δp va de 40 à 100mmCE. Les poussières qui sortent en 34 sont riches en zinc. La teneur en Zinc est très supérieure à 20% et pour un débit de soutirage de quelques centaines de grammes par heure.

Entre le dispositif de filtration secondaire 21 et le lit de charbon actif 23, la température des fumées doit être inférieure à 60°C et la quantité de poussières présente dans les fumées doit être inférieure à 0,5mg/Nm³. Concernant le lit de charbon actif 23, il comporte des granulés de 2 à 9mm de longueur pour 1 à 3mm de diamètre d'une grande surface spécifique de 100 à 1500m²/g. Ce lit de charbon actif fixe le mercure Hg et les molécules lourdes telles les dioxines, furannes et aromatiques. Les fumées qui sortent par la cheminée 25 ont une température inférieure à 60°C, une teneur en dioxines inférieure 0,1ng/Nm³, une teneur en poussières inférieure à 0,1mg/Nm³, une teneur en mercure Hg inférieure à 2 microg/Nm³ et une teneur en SOₓ inférieure à 50mg/Nm³.

Il ressort de la description qui vient d'être faite, que l'invention est basée sur la valorisation totale du manganèse contenu dans les piles. Ainsi, en fonction du besoin de manganèse dans la nuance de fonte à produire, on calcule la quantité totale de manganèse à charger dans le cubilot, d'une part, et, d'autre part le taux de manganèse contenu dans les ferrailles de charge, taux qui est inférieur à celui de la nuance visée. On calcule la différence entre la quantité totale de manganèse nécessaire et la quantité de manganèse contenue dans les ferrailles de charge. Cette différence constitue le différentiel de correction en manganèse qu'il faut ajouter. Puis on calcule à partir de ce différentiel la quantité de piles à mettre dans les charges, en fonction de la teneur en manganèse propre des piles. A ce propos, en sachant qu'une nuance donne toujours une fourchette de composition mini et/ou maxi, les piles à titre individuel ont une teneur en manganèse de 12 à 30% en poids, la moyenne ressort plutôt vers 20 à 22%. Ces fourchettes prennent en compte que cette moyenne évolue avec les technologies des producteurs de piles, leur pays d'origine de production et le délai de retour en recyclage du produit en fin de vie.

Concernant les autres matières des charges, on prend également en compte les quantités de ces matières qui sont contenues dans les piles.

Par exemple, en production de fonte, il faut charger du carbone type anthracite ou du coke, typiquement de l'ordre de 100 à 200kg/T par rapport aux charges métalliques, d'une part pour carburer le métal et d'autre part pour produire l'énergie nécessaire à la fusion. Pour la charge du carbone, on tient compte du carbone fixe et volatil contenu dans les piles pour ajuster le taux de carbone chargé, qu'il soit sous forme d'anthracite ou de coke.

On donnera ci-après un exemple de calcul et de mode opératoire selon l'invention. Bien entendu il s'agit d'un exemple non exclusif. Une fonderie de fonte veut produire une nuance avec un taux de manganèse de 0,7% minimum. Les ferrailles qu'elle achète pour les charges ont un taux de manganèse de 0,3%. Ainsi il faut corriger donc rajouter 0,4% de manganèse au minimum pour obtenir la nuance visée, soit 4kg de manganèse par tonne de matière métallique chargée.

On calcule la quantité de piles équivalent à 4kg de manganèse, soit, selon la moyenne en masse de teneur minimum de 20%, une quantité de 20kg de piles à charger avec une tonne de ferrailles.

Concernant le carbone, pour un calcul de charge qui donne un besoin de 150kg de carbone/tonne T de ferrailles, sachant qu'en masse les piles contiennent 15 à 32% de carbone, alors les 20kg de piles apporteront de l'ordre de 4kg de carbone, quantité à déduire des 150kg. Les opérateurs ou les automates de charge du carbone se verront modifier leurs consignes de 150kg à 146kg/tonne de ferrailles chargées.

Les piles comportent des composants qui sont particulièrement dangereux, comme le mercure même s'il est présent en faible quantité. Par ailleurs, d'autres composés présents dans les piles du type ZnCl2, KCL, goudron, carbone en poudre, composés métalliques sous forme finement divisée tels que les oxydes ou hydroxydes de manganèse, s'avèrent être de puissants catalyseurs de formation de dioxines, voir d'HPA (hydrocarbures polycycliques aromatiques) lors d'une montée en température progressive lors du processus de fusion.

C'est la présence de ces composés ou compositions chimiques, qui nécessite la présence du dispositif de traitement de gaz 16 qui constitue un dispositif d'épuration sophistiqué et performant.

On décrira ci-après le fonctionnement de l'installation selon l'invention et le déroulement des étapes du procédé.

Dans le système à cubilot à vent chaud ou froid selon l'invention, on canalise les fumées chaudes par un dispositif de captation en tête ou latéral sur le cubilot. Les fumées sont convoyées par une tuyauterie étanche avec refroidissement naturel et/ou forcé, par exemple à l'aide de l'échangeur 12 de la figure unique. On réalise une première filtration dans le dispositif de filtration primaire 14 afin de faire passer le taux de poussières contenues en sortie du filtre primaire à moins de 5mg/Nm³ typiquement à une température de 60 à 200°C. Après le traitement des fumées au filtre primaire 14, on les refroidit à une température inférieure à 60°C par l'échangeur 18 en circuit fermé, surtout sans injection d'eau sous quelques formes que ce soit (vapeur, gouttelettes etc) ceci afin de contracter la veine d'air. Les fumées sont filtrées de nouveau sur un deuxième filtre, à savoir le dispositif de filtration secondaire 21 pour faire passer le taux de poussières contenues à moins de 0,5mg/Nm³. Ensuite on termine la purification des gaz en les faisant passer par le filtre à charbon actif sulfuré 23 qui fixe le mercure et les molécules lourdes type dioxines, furannes et aromatiques sur le charbon actif. A la saturation du lit de charbon actif mesurée par sa perte de charge entrée-sortie, celui-ci est soutiré pour être ensuite dépollué et régénéré pour être réutilisé dans la même application.

Il est à noter que la purification des gaz au filtre secondaire est impérative, en ce qui concerne les poussières, pour éviter l'encrassement des porosités des charbons actifs et préserver leur durée de vie. Cette durée de vie serait de 2 à 6 mois sans filtre secondaire, mais sera de plusieurs années grâce à un filtre secondaire.

La température des gaz à l'entrée du filtre à charbon actif ne doit pas dépasser 60°C. A défaut, d'une part, les charbons actifs risquent de s'auto-échauffer avec emballement de réactions jusqu'à la possible destruction complète du filtre, et, d'autre part, l'efficacité des captations du mercure, en raison de sa très faible concentration, et des molécules lourdes nécessitent cette basse température des gaz.

Avec ces dispositifs de traitement de gaz, les rejets atmosphériques ont alors les très faibles valeurs suivantes déjà indiquées plus haut : pour le mercure, inférieures à quelques microgrammes/Nm³, pour les dioxines de 10 à 1000 fois inférieure à la norme de 0,1ng/Nm³ et pour les poussières, très inférieure à 0,01mg/Nm³.

Ainsi l'invention non seulement permet la valorisation de piles usées ou rebutées, mais assure également une purification quasi-complète des gaz de process.

L'invention ne fait appel d'une part à aucune structure particulière en termes de personnel d'exploitation sur le site déjà existant et, d'autre part, se substitue à des matières déjà consommées et transformées dans son coût direct d'exploitation.

L'invention assure une réduction de coût significative pour la fonderie. En effet, la substitution de nombreuses matières premières de charges (Fe, C, Mn, Cu) et l'enrichissement en zinc Zn des poussières les rendant valorisables génère une économie importante des composés comme suit, par tonne de piles consommées aux cours actuels des matières à la date du dépôt de brevet :
Manganèse : approximativement 200kg à 1 euros/kg, soit 200 euros ;
Fer : approximativement 200kg à 0,3 euros/kg, soit 60 euros ;
Carbone : approximativement 200kg à 0,35 euros/kg, soit 70 euros ;
Zinc : réduction de coût sur évacuation des poussières de fusion par enrichissement Zn, soit 85 euros ;
Cuivre : approximativement 10kg à 5,5 euros/kg, soit 55 euros.

Enfin l'arrêt de l'injection de réactif au filtre primaire, dans le cas où il existe, pour capter les dioxines, soit 25 euros.

Soit un total de production de valeur de l'ordre 450 à 500 euros/Tonne de piles desquels il faut soustraire les coûts directs de l'ordre de 80 à 100 euros/Tonne de piles et donc un gain net de l'ordre de 370 à 400 euros/T de piles hors amortissement et maintenance de l'installation de traitement des gaz proposée et coûts commerciaux d'animation environnementale et de traçabilité de la filière de valorisation.

Le tableau qui suit donne le bilan des matières valorisées grâce à l'invention.

| Elément chimique contenu dans les piles | Taux contenu dans les piles (%) | Taux de valorisation de l'invention (%) |
|---|---|---|
| Fe | 10-25 | >99,5 |
| Mn | 12-27 | >99,5 |
| Zn | 12-25 | >95 |
| C organique et fixe | 10-35 | C organique : production d'énergie, 100% |
| | | C fixe : recarburation, >80% |
| Cu | 0,5-1,5 | >99,5 |
| Ni | 0,1-0,7 | >99,5 |
| Sn | 0,02-0,03 | >99,5 |
| K et Cl | 3-10 | >80 |
| Hg | 2ppm à 1000ppm | >99,5 |

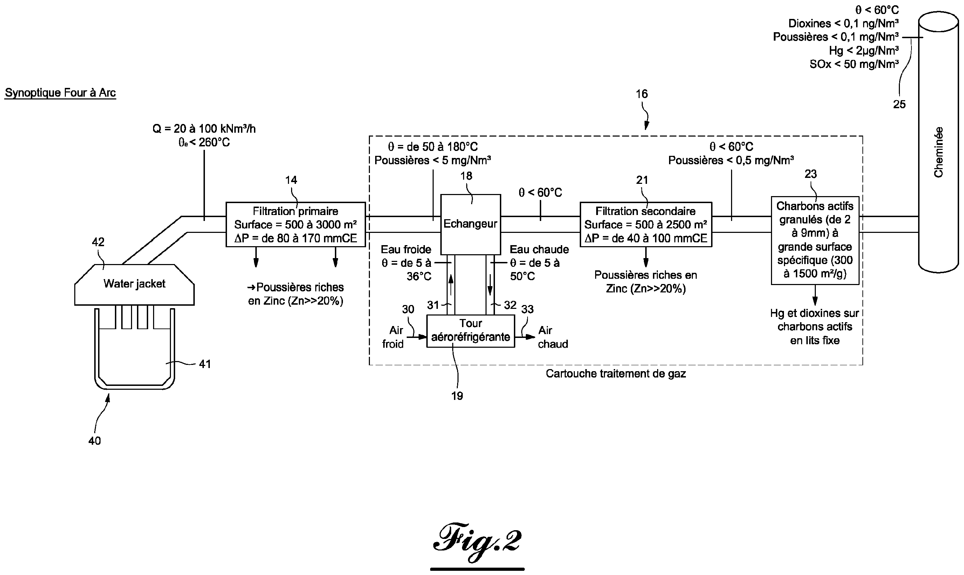

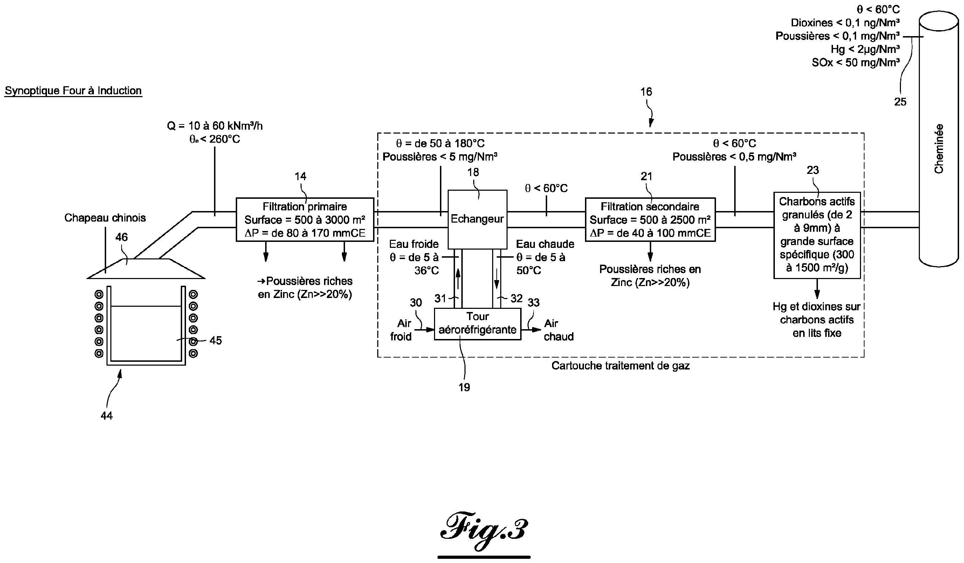

L'invention a été décrite ci-avant, à titre d'exemple, dans un mode de réalisation impliquant l'utilisation, à titre de four de fusion de métal, un cubilot de production de fonte. Cependant l'invention n'est pas limitée a un cubilot et la valorisation des piles usagées ou rebutées peut également être accomplie en utilisant d'autres fours de fusion de fonte tel qu'un four à arc libre ou un four à induction comme le montrent les figures 2 et 3 à condition de prévoir dans la voie d'évacuation des fumées chaudes, entre le four et la cheminée le dispositif de filtration primaire 14 et la cartouche de traitement de gaz 16 figurant dans le système de valorisation comportant le cubilot, conformément à la figure 1.
Il est important de noter que le taux de valorisation des matières des piles électriques usagées ou rebutées, telle que décrite dans l'invention est exceptionnellement élevé et très supérieur à celui dicté dans la directive Européenne 2006/66 CE.

La figure 2 montre le synoptique du système à four à arc. Ce four d'une configuration connue en soi est désigné par la référence 40. Les nombres 41 et 42 désignent le liquide contenu dans le laboratoire du four à arc et la tubulaire d'extraction de gaz chauds directement depuis le four elle-même refroidie par eau. Les gaz chauds en sortie du four à arc, en amont du dispositif de filtration primaire 14 ont, dans l'exemple représenté, un débit compris entre 20 à 100kNm³/h et une température inférieure à 260°C. Les gaz chauds sont ensuite traités et purifiés en passant à travers le dispositif de filtration primaire 14 et la cartouche de traitement de gaz 16, utilisée dans le cadre de l'utilisation du cubilot de la figure 1.

La figure 3 donne le synoptique d'un four à induction auxquels sont associés, pour la mise en œuvre du procédé de valorisation des piles usagées ou rebutées, le dispositif de filtration primaire 14 et la cartouche de traitement 16. Sur la figure 3, le four à induction est désigné par la référence générale 44, les numéros de référence 45 et 46 désignant le liquide et le chapeau chinois. Les vapeurs chaudes sortant du four à induction, en amont du dispositif de filtration primaire 14 ont un débit de 10 à 60kNm³/h et une température inférieure à 260°C.

La valorisation des piles et usagées ou rebutées dans des fours à arc et des fours à induction de production de fonte selon les dispositions de l'invention est rendue possible grâce au dispositif de filtration et à la cartouche de traitement des gaz, qui permettent d'éliminer les éléments nocifs tel que le mercure et les molécules lourdes telles les dioxines, furannes et aromatiques avant l'évacuation des fumées dans l'atmosphère par l'intermédiaire de la cheminée 25.

## Revendications

1. Procédé de valorisation de piles électriques usagées ou rebutées de types portables, **caractérisé en ce que** les piles usagées ou rebutées sont introduites à titre de charge dans un four de fusion de métal (1,40,44), et **en ce que** l'on prévoit dans la voie d'évacuation des gaz chauds en aval du four de fusion, un dispositif (16,23) de purification des gaz pour capter et éliminer les éléments nocifs tels que le mercure, les chlorures voire fluorures et les molécules lourdes telles les dioxines, furannes et aromatiques, dans lequel les fumées chaudes sortant du four de fusion sont soumises à des opérations de filtration (14,21), primaire (14) et secondaire (21), pour réduire la concentration des poussières contenues dans les fumées à une valeur inférieure à 0,5mg/Nm³, et dans lequel les fumées passent ensuite par un lit de charbon actif sulfuré ou non (23) pour fixer le mercure et les molécules lourdes telles les dioxines, furannes et aromatiques de façon que les fumées évacuées dans l'atmosphère (25) aient une teneur en mercure inférieure à 2µg/Nm³ et en dioxines inférieure à 0,1ng/Nm³.

2. Procédé selon la revendication 1, **caractérisé en ce que** l'on récupère lors des opérations de filtration (14,21) des poussières riches en zinc avantageusement supérieures à 20% de zinc.

3. Procédé selon la revendication 1 ou 2, **caractérisé en ce qu'**à l'entrée du dispositif de filtration primaire (14), la température des fumées est de 80°C à 200°C.

4. Procédé selon l'une quelconque des revendications 1 à 3, **caractérisé en ce que** dans le dispositif de filtration primaire (14) le taux de poussières contenues en sortie du filtre primaire passe à moins de 5mg/Nm³ typiquement à une température de 60 à 200°C.

5. Procédé selon l'une quelconque des revendications 1 à 4, **caractérisé en ce qu'**après le traitement des fumées au filtre primaire (14), on refroidit les fumées à une température inférieure à 60°C par un échangeur (18) en circuit fermé, sans injection d'eau sous quelques formes que ce soit afin de contracter la veine d'air.

6. Procédé selon la revendication 4, **caractérisé en ce que** dans la cartouche de traitement (16), la température des fumées à l'entrée de l'échangeur (18) est comprise entre 50 et 180°C et la concentration en poussières est inférieure à 5mg/Nm³.

7. Procédé selon la revendication 5 ou 6, **caractérisé en ce que** de l'eau froide est envoyée à l'échangeur (18) par la tour aéroréfrigérante (19), ladite eau froide étant à une température allant de 5 à 36°C et la température de l'eau chaude renvoyée par l'échangeur à la tour aéroréfrigérante (19) est de 5 à 50°C.

8. Procédé selon l'une quelconque des revendications 1 à 7, **caractérisé en ce que** la température des gaz à l'entrée du filtre à charbon actif ne dépasse pas 60°C.

9. Procédé selon l'une quelconque des revendications 1 à 8, **caractérisé en ce que** lit de charbon actif est un filtre à charbon actif sulfuré (23) qui fixe le mercure et les molécules lourdes type dioxines, furannes et aromatiques sur le charbon actif.

10. Procédé selon l'une quelconque des revendications 1 à 9, **caractérisé en ce que** les fumées chaudes sortant du four de fusion et/ou d'un système de post-combustion ont une température comprise entre 800°C et 1000°C.

11. Procédé selon l'une des revendications 1 à 10, **caractérisé en ce qu'**on utilise un lit de charbon actif sulfuré ou non en granulés (23) d'une surface spécifique de 300 à 1500m²/g.

12. Procédé selon l'une des revendications 1 à 11, **caractérisé en ce que** les fumées sortent par une cheminée (25) à une température inférieure à 60°C, une teneur en dioxines inférieure 0,1ng/Nm3, une teneur en poussières inférieure à 0,1mg/Nm³, une teneur en mercure Hg inférieure à 2 µg/Nm³ et une teneur en SOₓ inférieure à 50mg/Nm³.

13. Procédé selon l'une des revendications 1 à 12, **caractérisé en ce que** l'on utilise pour la valorisation des piles usées ou rebutées un cubilot (1), un four à arc libre (40) ou un four à induction (44).

14. Procédé selon l'une des revendications 1 à 13, **caractérisé en ce que** l'on utilise des piles salines, alcalines, boutons de faibles dimensions, qui comportent des composants valorisables tel que du fer, du zinc, du manganèse, du cuivre et du carbone fixe et volatil, et des métaux lourds et composés dangereux tels que du mercure, nickel et ses composés sous forme d'oxydes ou hydroxydes, plomb et argent, braie, chlorures voire fluorures.

15. Installation pour la mise en œuvre du procédé selon l'une des revendications 1 à 14, **caractérisé en ce qu'**il comprend un four de fusion de métal (1,40,44) et un agencement de traitement de fumées (16) en provenance du four pour réduire la teneur en poussières, en mercure et en molécules lourdes type dioxines, furannes et aromatiques dans les fumées évacuées dans l'atmosphère à des valeurs respectivement inférieure à 0,01mg/Nm3, 2µg/Nm³ et inférieure à 0,1µg/Nm³, l'agencement du traitement des fumées comprenant une cartouche (16) de traitement de gaz pourvue d'un lit de charbon actif sulfuré ou non en granulés (23) pour capter le mercure et les molécules lourdes type dioxines, furannes et aromatiques, l'agencement de traitement des fumées comprenant des dispositifs de filtrage (14,21), primaire (14) et secondaire (21), pour réduire la concentration des poussières dans les fumées à une valeur inférieure à 0,5mg/Nm³ en entrée du lit de charbon actif.

16. Installation selon la revendication 15, **caractérisée en ce que** la cartouche (16) comprend en amont du lit de charbon actif (23) un dispositif d'abaissement (18) de la température des fumées à passer par le lit de charbon à une valeur inférieure à 60°C, de préférence ledit dispositif d'abaissement (18) de la température étant un échangeur de chaleur.

17. Installation selon la revendication 15 ou 16, **caractérisée en ce que** la cartouche de traitement de gaz (16) disposée en aval du dispositif de filtration primaire (14) comprend dans la direction d'écoulement des fumées, successivement, un échangeur de chaleur (18) relié à une tour aéroréfrigérante (19), un dispositif de filtration secondaire (21) et un lit de charbon actif sulfuré ou non (23).

18. Installation selon la revendication 15 ou 16, **caractérisée en ce que** le lit de charbon comporte des granulés de 2 à 9mm de longueur pour 1 à 3mm de diamètre d'une surface spécifique de 100 à 1500m²/g.

19. Installation selon l'une quelconque des revendications 15 à 18, **caractérisée en ce que** les fumées sont évacuées dans l'atmosphère à travers une cheminée (25) .

20. Installation selon l'une quelconque des revendications 15 à 19, **caractérisée en ce que** le four de fusion est un cubilot (1), un four à arc (40) ou un four à induction (44) de production de fonte.
